# EUROPEAN PATENT SPECIFICATION

(11) **EP 1 957 420 B1**
(45) Date of publication and mention of the grant of the patent: **12.06.2019**
(21) Application number: 06847324.8
(22) Date of filing: 28.11.2006
(51) Int. Cl.: C03B 37/018, G02B 6/10, C03B 37/014

(54) **METHOD FOR PRODUCING AN OPTICAL FIBER HAVING LOW AND UNIFORM OPTICAL LOSS ALONG THE ENTIRE LENGTH**
VERFAHREN ZUR HERSTELLUNG EINER GLASFASER MIT NIEDRIGEM UND EINHEITLICHEM OPTISCHEM VERLUST ÜBER DIE GESAMTE LÄNGE
PROCÉDÉ DE FABRICATION D'UNE FIBRE OPTIQUE PRÉSENTANT UNE PERTE FAIBLE ET UNIFORME SUR TOUTE SA LONGUEUR

(30) Priority: 09.12.2005 IN MM15302005
(43) Date of publication of application: 20.08.2008
(73) Proprietor: Sterlite Technologies Limited, Aurangabad - 431 136, Maharashtra (IN)
(72) Inventor: DAYANANDAN, Sreena, Maharashtra (IN); SHAH, Sanket, Maharashtra (IN); ACHARYA, Ravikiran, Maharashtra (IN); MIRAS, Jegan, Maharashtra (IN)
(74) Representative: Browne, Robin Forsythe
(86) International application number: PCT/IN2006/000477
(87) International publication number: WO 2007/069278

(56) References cited:
- WO-A1-2005/063638
- WO-A2-03/000011
- WO-A2-2006/071865
- US-A1- 2002 092 327
- US-A1- 2003 024 278
- US-B1- 6 477 305
- US-B1- 6 477 305

## Description

### Field of the Invention:

The present invention relates to optical fiber having low and uniform optical attenuation loss along the entire length and method for fabricating the same. Particularly, the present invention relates to optical fiber preform capable of producing optical fiber having low and uniform optical attenuation loss along the entire length including the top end portion thereof, and method for producing the same.

### Background of Invention:

Optical fibers are inherently versatile as a transmission medium for all forms of information, be it voice, video or data.

The primary object of telecommunication industry is to transmit greater amount of information, over longer distances, in shorter period of time. This object can be fulfilled with the optical fibers having low and uniform optical attenuation loss, particularly in the region of 1360-1460 nm (E-band region).

Conventionally, the single mode optical fiber is utilized for data transmission in the wavelength region ranging from about 1300 nm to about 1600 nm region. However, the use of conventional single mode fiber is restricted to data transmission at about 1310 nm (O-band) and about 1550 nm (C-band) wavelength regions. The conventional single mode optical fiber cannot be used in the 1360-1460 nm (E-band) wavelength region for the data transmission due to high and non-uniform optical attenuation loss in this wavelength region, particularly at 1383 nm during the transmission. The high attenuation loss of the transmitted signal in the conventional single mode optical waveguide fiber is due to a high absorption band in said region at said wavelength of 1383 nm. It has been observed that this high absorption band is due to the presence of moisture (OH ions) in the conventional fiber. The non-uniform optical attenuation loss of the transmitted signal in the conventional single mode optical waveguide fiber is due to un-collapsed top end portion of the preform. It has been observed that during the sintering and/or collapsing process steps the capillary or center line in the top end portion of the fiber does not collapse completely. Under such circumstances, if the optical fiber is drawn from such preform then the same will not have uniform optical attenuation loss. This problem can be overcome, but with discarding the top end portion of the optical fiber preform before drawing the fiber therefrom. The discarding of the top end portion of the preform measuring about 10-15% of the total length overcomes the problem of non-uniformity, but enhances the cost of production of the optical fiber.

Therefore, the single mode optical fiber that can be utilized in the transmission of signal in wavelength region ranging from about 1300 nm to about 1625 nm including the E-band region from about 1360-1460 nm will be the one having no absorption band in said E-band region, particularly at said wavelength of about 1383 nm, that is the optical fiber having no or reduced OH ions thereby having low water peak, and uniform optical attenuation loss in wavelength region ranging from about 1300 nm to about 1625 nm including the E-band region from about 1360-1460 nm, that is the optical fiber drawn from optical fiber preform having completely collapsed capillary or center line including at the top end portion of the preform thereby resulting in saving on cost of production and making the overall process not only useful, but also economical.

The high network capacity growth and the increased need for the utilization of the entire wavelength region ranging from about 1300 nm to about 1625 nm, that is including O-band, C-band and E-band regions and the above described problems and drawbacks of the known optical fiber have lead to the development of present invention to produce optical fiber having low and uniform optical attenuation loss, wherein the optical attenuation loss is uniform and less than about 0.35 dB/Km for the wavelength region ranging from about 1300 nm to about 1625 nm, particularly uniform and less than about 0.31 dB/Km at about 1383 nm (in E-band region). The presently disclosed optical fiber has also been observed to have low and uniform attenuation loss preferably being less than about 0.34 dB/Km, more preferably being less than about 0.33 dB/Km at 1310 nm (O-band) and preferably less than about 0.20 dB/Km, more preferably less than about 0.19 dB/Km at 1550 nm (C-band).

The optical fiber is drawn from optical fiber preform. The optical fiber of predetermined dimension is drawn from the optical fiber preform by subjecting one end of the preform to a high temperature, for example above 2000°C. Under such a high temperature, the tip of the preform softens, from which a thin fiber of desired dimension is drawn. Various methods for manufacturing the optical fiber preform are known in the art.

The optical fiber preform comprises a central core and an outer cladding. The core rod itself comprises a core and part of cladding of the fiber preform. Conventionally, the core rod can be prepared by any known method. For example by OVD method, wherein the soot is deposited on the cylindrical member (also referred as target rod) to form soot porous body. In this method, the soot deposition is accomplished by traverse motion of the target rod over the burners or vice versa. The initial soot deposition comprises dopant chemicals to increase index of the core and dopant chemicals are terminated after desired core diameter. The deposition process continues until the required dimension of the soot porous body is attained for meeting desired core diameter in fiber preform and the desired core-clad diameter ratio in the fiber. A typical single mode optical fiber may have core of 8-10 mm diameter and clad of 125 mm diameter. After completion of soot deposition, the cylindrical member is detached from the soot porous body to form hollow cylindrical soot porous body [herein after referred to as hollow soot porous body]. The hollow soot porous body is then moved into a sintering furnace, wherein this soot body is dehydrated and sintered (also known as vitrification or consolidation) in a chlorine and helium atmosphere to form optical fiber preform at about 1500°C.

The dehydration and sintering processes are carried out inside specially built furnaces that are equipped with one or more heating elements and gas input mechanisms. The dehydration and sintering processes comprise inserting the hollow cylindrical soot porous body into a sintering furnace and subjecting it to a temperature regime under certain chemical environment. The chemical environment necessary for dehydration is provided with the help of gases that promote dehydration. The chemical environment that is necessary for sintering is provided with gases that are inert and which are good conductors of heat.

The sintered glass optical fiber preform (called mother preform) is either directly drawn into optical fiber or into several core rods which comprise core of the fiber and part of clad of the fiber. The core rod drawn is then overcladded by depositing soot over the core rod to form soot porous body having solid core rod. The soot porous body is then dehydrated and consolidated to form optical fiber preform (called daughter preform). Accordingly, the optical fiber can be drawn either directly from the mother preform or the daughter preform.

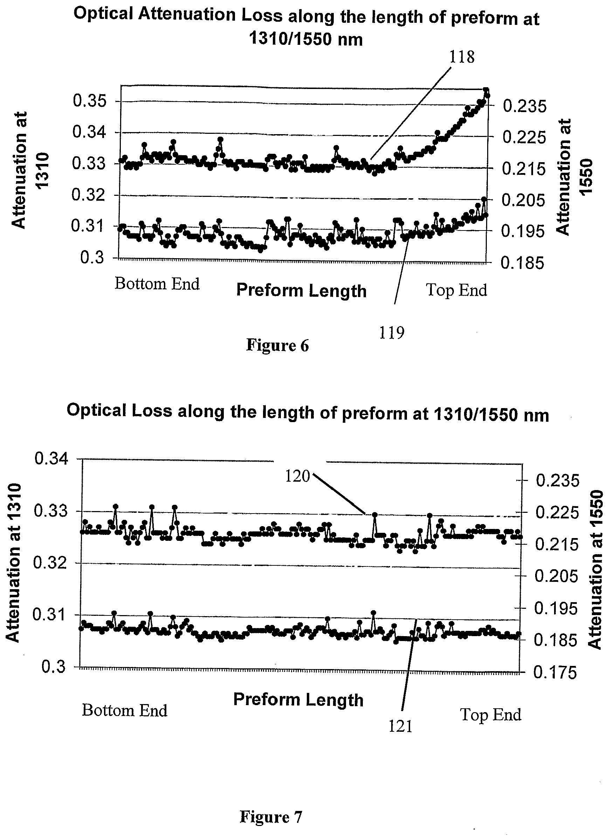

The performance of optical fiber for communications is primarily determined by optical loss or attenuation and by dispersion. If the attenuation loss is higher then the fiber cannot be employed for transmission in E-Band, that is the wavelength region varying from 1360 nm to 1460 nm because the fiber will have higher absorption peak at 1383 nm wavelength. The optical fiber produced by the conventional method is found to have higher attenuation loss at its top end portion than its other portions [Figure 6]. The top end portion of the optical fiber is found to have higher optical loss of about 0.35 dB/km or more at 1310 nm when compared to its middle portion. Similarly, the top end portion of the optical fiber is found to have higher optical loss of about 0.205 dB/km or more at 1550 nm when compared to its middle portion. The problem of higher and non-uniformity of optical attenuation loss at the top end of the preform or fiber, as described herein above can only be overcome by discarding the top end portion measuring about 10-15% of the entire length of the preform or the drawn fiber thereby making the overall process less productive and uneconomical. The top end portion is discarded because it does not meet the required limits and uniformity requirements of the optical attenuation loss.

It has been observed that the top portion of the hollow soot porous body does not collapse completely during the consolidation or sintering step and collapsing step, which may be performed one after the another or simultaneously. The un-collapsed capillary at the top end portion of the preform or fiber in both such cases wherein the sintering and collapsing steps are either performed one after the another or simultaneously has been observed to be about 10 -15 cm long [about 10-15% of the total length of the preform or the fiber] which in-turn results in the optical fiber having top end with higher and non-uniform optical attenuation loss as compared to its rest of the portion thereby resulting in wastage of top end of the fiber produced, which has to be discarded.

The US Patent 4,251,251 teaches a method for producing an optical fiber preform wherein the hollow soot porous body is consolidated into a dense glass with closed aperture [also referred as capillary or centerline] by inserting it in the hot zone of the furnace. As per this method the hollow soot porous body is inserted once or twice or more times into the consolidation furnace to consolidate the preform and close the aperture. According to this method, the preform is completely withdrawn from the furnace for observing the aperture size. The step of insertion of preform is repeated till the aperture is completely closed. It has been observed by the present inventors that this process suffers from two main drawbacks. One, the number of insertions cannot be determined before the start of the process thereby making the completion of the overall process uncertain, because the duration of the completion of the process cannot be known till the process is complete. Two, the capillary does not get completely closed. It remains open at the top end portion of the preform as in the conventional methods described herein above thereby making the overall process uneconomical, because the top end portion of the preform will have to be discarded before drawing the fiber therefrom. In case the fiber is drawn without discarding the top end portion of the preform, then the fiber produced will have high and non-uniform optical attenuation loss at the top end portion of the fiber drawn.

The another drawback of the above prior art method is that it is guided by ratio of viscosity of the core to that of cladding, which is required to be half or less. The dependency upon ratio of viscosity is due to presence of very higher amounts of germanium oxide, which is not required in the presently required optical fibers. Accordingly, this method is not suitable for producing the optical fibers having lower concentration of germanium oxide.

Still another limitation of the above prior art method is that it does not teach how to produce an optical fiber having low and uniform optical attenuation loss over the entire length of the fiber produced, because it does not address the problem of closing the top end portion of the preform.

Another limitation of the above prior art method is that the low hydroxyl silica available at that time had a notably higher OH contents, which resulted in undesired high absorption water peak in the desired range of wavelength.

The above problem of incomplete closure of top end portion of the preform has been overcome, but partly by another prior art method discussed in US Patent 6,477,305. As per this method, the preform is first consolidated followed by closure of capillary in the porous body, which means the consolidation (or say sintering) and closure of capillary (say collapsing) process steps are not performed simultaneously, but one after the another which in-turn results in increase of number of process steps thereby making the overall process more time consuming and uneconomical. In accordance with this method the bottom end plugged with a plug is first closed followed by closure of capillary. Following the consolidation step, the sintered glass preform is completely withdrawn from the furnace and the center line (capillary) is exposed to the vacuum through its top end f0.50ollowed by its re-insertion in the furnace while the center line is still under vacuum, which confirms that the top end is still unsealed. The center line hole closes during the second insertion, but the top end still remains open thereby making this process also unsuitable for producing the preform having the completely sealed capillary to produce the fiber having the low and uniform optical attenuation loss.

The alternative methods of the above prior art do overcome the problem of incomplete sealing of top end portion, but at the additional cost of insertion of another sophisticated plug in the top end thereby making the alternative methods of this prior art uneconomical and more complicated. It has also been observed that the sealing of the top end portion of the preform with the help of insertion of additional sophisticated plug in the top end is not achieved completed. Even the alternative methods of this prior art have been observed to leave part of the top end unsealed, which has to be discarded before drawing the fiber therefrom.

The complete withdrawal of the preform during the sintering and/or collapsing process steps in accordance to the above-described prior art methods also suffer from the drawback of loss of heat capacity.

### Need of the Invention:

Accordingly, there is a need to develop a method for manufacturing optical fiber having low and uniform optical attenuation loss along the entire length. Particularly, there is a need to develop a method for producing optical fiber preform capable of producing optical fiber having low and uniform optical attenuation loss along the entire length including the top end portion thereof.

### Objects of the Invention:

The main object of the present invention is to provide a method for manufacturing optical fiber perform capable of producing optical fiber having low and uniform optical attenuation loss along the entire length including the top end portion thereof. Another object of the invention is to provide a method for producing optical fiber preform capable of producing optical fiber having low and uniform optical attenuation loss in the wavelength region ranging from about 1300 to about 1625 nm including O-band, E-band and C-band regions.

The another object of the present invention is to provide a method for producing optical fiber preform capable of producing optical fiber having uniform and no or low absorption band at wavelength of 1383 nm, that is having no or low moisture (OH ions) contents.

Still another object of the present invention is to provide a method for producing optical fiber preform having completely collapsed capillary or centerline hole including in the top end portion of the preform so that the top end portion is not discarded to have low and uniform optical attenuation loss over the entire length of the fiber produced thereby resulting in saving on about 10-15% of the total length of the preform and on cost of production and making the overall process not only useful, but also highly productive and economical.

Here-in is also disclosed an optical fiber having uniform optical attenuation loss over its entire length and the attenuation loss is less than about 0.35 dB/Km for the wavelength region ranging from about 1300 nm to about 1625 nm, particularly less than about 0.31 dB/Km at about 1383 nm (in E-band region), preferably less than about 0.34 dB/Km, more preferably less than about 0.33 dB/Km at about 1310 nm (O-band) and preferably less than about 0.20 dB/Km, more preferably less than about 0.19 dB/Km at about 1550 nm (C-band).

This is an object of the present invention to provide a method for producing the optical fiber preform wherein the preform is not completely withdrawn from the furnace for observing the aperture size thereby avoids heat loss on account of complete withdrawal of the preform.

This is still an object of the present invention to provide a method for producing the optical fiber preform wherein the preform is inserted only twice for predetermined duration thereby making the duration of completion of the overall process certain.

This is another object of the present invention to provide a method for producing the optical fiber preform which is also suitable for producing the optical fiber having lower concentration of germanium oxide.

This is yet an object of the present invention to provide a method for producing the optical fiber preform wherein the sintering (or say consolidation) and collapsing (or say closure of capillary) process steps are performed simultaneously thereby making the overall process less time consuming and economical.

This is yet another object of the present invention to provide a method for producing the optical fiber preform wherein no additional and sophisticated plug is required to be inserted in the top end of the capillary or centerline to achieve the complete closure thereof thereby making the present process more economical and less complicated.

### Brief Description of the Invention:

The optical fiber preform produced by the methods of the prior art discussed hereinabove is observed to have higher and non-uniform attenuation loss at the top end of the optical fiber preform due to incomplete collapse of capillary before removal from the sintering furnace. The optical fiber manufactured from such optical fiber preform is also observed to have higher and non-uniform attenuation loss at the top end thereof as compared to its other portions. This problem has been partially avoided either by scrapping the top end of the preform or the fiber produced, or by employing an additional and sophisticated plug in the top end of the capillary, which due to complexity of the resulted process, and productivity and economical reasons is not desirable.

It has been surprisingly observed that if the sintering and collapsing process steps are carried out simultaneously while doing stepwise and controlled heat treatment of the top end portion of the preform in-addition to rest of the preform, the capillary or centerline hole of the preform gets completely collapsed thereby resulting in formation of solid glass preform having completely collapsed capillary or centerline hole to produce optical fiber having low and uniform optical attenuation loss over its entire length including the top end portion, which in-turn results in savings on about 10-15% of the total length of the preform and the fiber produced therefrom, and on the cost of production and makes the overall process not only useful, but also highly productive and economical. The optical attenuation loss of the fiber produced from such preform has also been observed to be lower than the desired limits.

Accordingly, the present invention is directed to have a method for producing the optical fiber preform wherein the optical fiber preform produced does not have opened capillary, particularly at the top end of the preform before completely removing the preform from the sintering furnace.

Accordingly, the present invention relates to a method for producing optical fiber preform capable of producing optical fiber having low and uniform optical attenuation loss along its entire length including the top end portion comprising:
i) depositing soot over the tapered cylindrical member to form soot porous body having core and clad;
ii) detaching the cylindrical member from the soot porous body to the form hollow soot porous body;
iii) inserting the plug in the bottom end of the capillary of the hollow soot porous body;
iv) dehydrating the hollow soot porous body in a chemical environment suitable to completely remove the moisture in core;
   characterized in that
   the dehydrated hollow soot porous body is simultaneously sintered and collapsed inside a sintering furnace while providing vacuum inside the capillary to form solid glass optical fiber preform having collapsed capillary, the simultaneous sintering and collapsing process steps are carried out by inserting the dehydrated hollow soot porous body with predetermined speed in the hot zone of the furnace till the top end of the preform reaches the hot zone and is left for the predetermined duration;
   thereafter the preform is uplifted for the predetermined length at predetermined speed to avoid heat loss in the optical preform and re-inserted in the hot zone of sintering furnace at a predetermined speed and left for predetermined duration to result in formation of the preform having collapsed capillary or centerline including at the top end of the preform.

Accordingly, the presently disclosed method achieves complete collapsing of the capillary, including at its top end portion, of the hollow soot porous body of the preform during the simultaneous sintering and collapsing process steps by stepwise and controlled heat treatment of the preform at its top end portion, which in-turn can produce the optical fiber having low and uniform optical attenuation loss over its entire length, that's too without discarding any portion thereof and without employing an additional and sophisticated plug in the top end of the capillary.

The other objects, preferred embodiments and advantages of the present invention will become more apparent from the following description when read in conjunction with accompanying drawing which are not intended to limit scope of the present invention.

### Brief Description of the Accompanying Drawing:

Figure 1 shows the optical fiber preform having completely collapsed capillary produced by dehydration, and simultaneous sintering and collapsing process steps from the hollow soot porous body in accordance with the present invention.
Figure 2 shows the cross sectional view of the hollow soot porous body.
Figure 3 shows the sintering and collapsing process steps to produce optical fiber preform from the hollow soot porous body according to the present invention.
Figure 4A shows the top portion of the hollow soot porous body inserted inside the sintering furnace.
Figure 4B shows the top portion of the sintered solid glass preform having open capillary at the top end as produced in accordance with the method of prior art.
Figure 4C shows the top end portion of the sintered solid glass preform having completely closed capillary even at the top end portion as produced in accordance with the present invention.
Figure 5 shows the temperature profile inside the sintering furnace along the length of the sintering furnace in accordance with one of the preferred embodiments of this invention.
Figure 6 shows the optical attenuation loss of optical fiber drawn from complete length of the optical fiber preform produced in accordance with the prior art methods.
Figure 7 shows the optical attenuation loss of optical fiber drawn from complete length of optical fiber preform produced in accordance with the present invention.
Figure 8 shows the spectral attenuation loss at wavelength ranging from 1200 nm to 1600 nm of conventional single mode optical fiber and low water peak optical fiber produced in accordance with the present invention.

The principles and features of the present invention will be readily apparent from the following detailed description, when read in conjunction with the accompanying drawings.

### Detailed Description of the Invention:

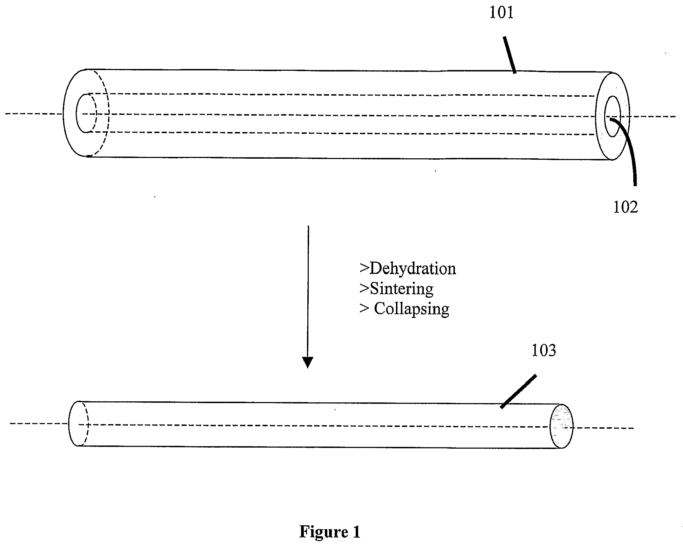

In accordance with the present invention, the process for fabricating low OH content optical fiber having low and uniform optical loss along the entire length of optical fiber preform and the fiber produced therefrom and also having the optical attenuation loss less than the desired limits starts with the preparation of a hollow cylindrical soot porous body 101 [Figure 1], made of glass forming soot material.

The hollow soot porous body 101 can be prepared by any method known in the art. For example by atmospheric chemical vapor deposition method. The preparation of hollow cylindrical soot porous body 101 comprises the following steps. The glass-forming precursor compounds are oxidized and hydrolyzed to form porous silica based materials. The porous silica based materials are deposited on a tapered cylindrical member to form soot porous body. During the deposition process, the cylindrical member is rotated and also moved along its length to deposit the soot on the cylindrical member. During the deposition process, dopant chemicals for example GeCl₄ are also deposited to form the core of the preform and later dopant chemicals are terminated to form only clad of the preform.

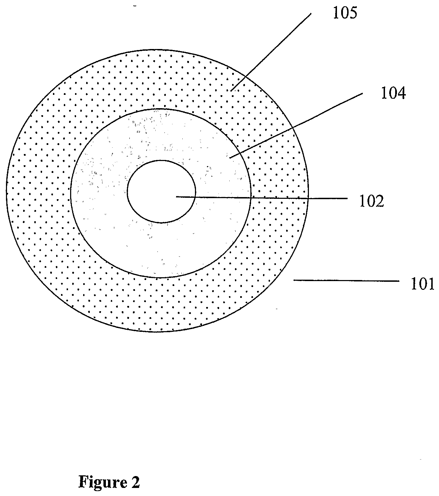

After completion of deposition, the cylindrical member is detached from the soot porous body thereby resulting in formation of a hollow cylindrical soot porous body (herein after referred to as hollow soot porous body). The hollow soot porous body 101 thus formed comprises a core region 104 having a hollow space [herein after referred to as capillary or as centerline hole] 102 and clad region 105 of optical preform, and said core region 104 has refractive index greater than that of the clad region 105 [Figure 2].

After detachment of cylindrical member a capillary 102 is created inside the soot porous body 101. The amount of deposition of the clad region 105 and core region 104 is achieved to have the ratio diameter of clad region 105 to the diameter of core region 104 from about 2.2 to about 4.

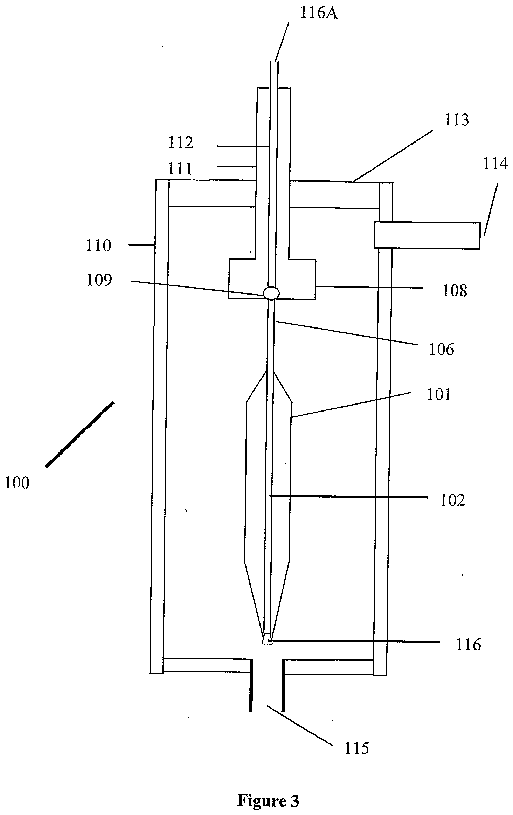

The prepared hollow soot porous body 101 is transferred to the sintering furnace 100 [Figure 3] in order to achieve dehydration and sintering of the hollow soot porous body 101, and collapsing of the capillary 102 of the hollow soot porous body 101 to form a solid glass preform 103 [Figure 1]. Thus, the prepared hollow soot porous body 101 is dehydrated, sintered and collapsed to convert it into solid glass preform 103.

According to the present invention, a method for producing optical fiber preform capable of producing optical fiber having low and uniform optical attenuation loss along its entire length including the top end portion is provided, wherein the said method comprises:
i) depositing soot over the tapered cylindrical member to form soot porous body 101 having core 104 and clad 105;
ii) detaching the cylindrical member from the soot porous body to the form hollow soot porous body 101;
iii) inserting the plug 116 in the bottom end of the capillary 102 of the hollow soot porous body 101;
iv) dehydrating the hollow soot porous body 101 in a chemical environment suitable to completely remove the moisture in core;
v) ;
   characterized in that
   the dehydrated hollow soot porous body 101 is simultaneously sintered and collapsed inside a sintering furnace 100 while providing vacuum inside the capillary 102 to form solid glass optical fiber preform 103 having collapsed capillary 102,
   the simultaneous sintering and collapsing process steps are carried out by inserting the dehydrated hollow soot porous body 102 with predetermined speed in the hot zone of the furnace 100 till the top end T of the preform 101 reaches the hot zone and is left for the predetermined duration;
   thereafter the preform 101 is uplifted for the predetermined length at predetermined speed to avoid heat losses in the optical preform and re-inserted in the hot zone of sintering furnace 100 at a predetermined speed and left for predetermined duration to result in formation of the preform 103 having collapsed capillary or centerline 102 including at the top end T of the preform 103.

Figure 3 shows the general arrangement of the apparatus used in the present invention for dehydration, sintering and collapsing of the hollow soot porous body 101. According to the present invention, the sintering and collapsing process steps are carried out simultaneously which avoid additional process step thereby resulting in savings on time of overall production of the solid glass preform. The simultaneous sintering and collapsing also results in achieving the collapsing of the capillary 102 without causing the heat loses.

The hollow soot porous body 101 is inserted inside the furnace 100 with the help of the handle rod 106. The driving mechanism (not shown) facilitates lowering of the hollow soot porous body 101 into the furnace 100. The furnace 100 comprises a glass muffle tube 110 having a diameter sufficient to accommodate the preform 101 and to adequately provide the environment necessary for dehydration, sintering and collapsing. The muffle tube 110 is heated to temperatures necessary for dehydration and simultaneous sintering and collapsing process steps with the heating means (not shown) that is fitted to the sintering furnace 100.

In accordance with the present invention, the heating means are selected to create three heat zones inside the muffle tube 110 over a length of about 2250 mm (measured along the length of the muffle tube), which length is found to be dependent upon the dimensions of the heating means and the amount of heat provided. A thermocouple (not shown) provided in the furnace 100 measures the temperature of the hot zones inside the furnace created by the heating means, and the data measurement is fed to the temperature controller (not shown) that controls the temperature inside the muffle tube 110.

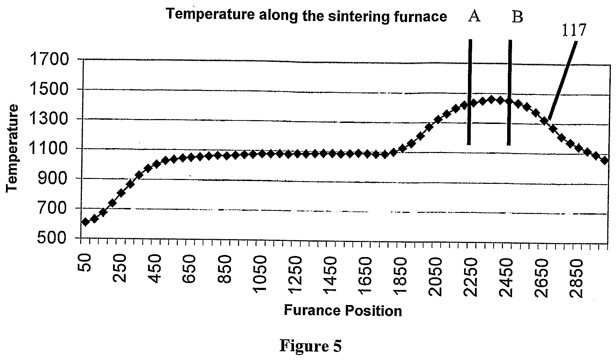

The temperature profile illustrating three heating zones created by the heating means of the sintering furnace along the length in accordance with one of the preferred embodiments of the present invention is shown in accompanying Figure 5.

In accordance with the preferred embodiment of this invention, the heat zone (also referred to as hot zone or heating zone) of the furnace comprises first heat zone measuring upto about 1200 mm, the separator measuring upto about 400 mm and second heat zone measuring upto about 200 mm. The heating zone from about 650 to about 1850 mm from top of the furnace having a temperature varying from about 1000 to 1100 degree centigrade is referred to as first heat zone, the heating zone from about 1850 to about 2250 mm from top of the furnace having a temperature varying from about 1100 to 1550 degree centigrade is referred to as separator zone which separates first heat zone from second heat zone, and the heating zone from about 2250 to about 2450 mm from top of the furnace having a temperature varying from about 1550 to 1650 degree centigrade is referred to as second heat zone. For the ease of understanding, the start point and end point of the second heat zone have been marked by 'A' and 'B' in the accompanying Figure 5. It may be noted that depending upon the length of the preform, the length of the respective heating zone may extend. For example, the second heat zone may be extended upto about 2650 mm.

The first heating zone facilitates the dehydration of the hollow soot porous body 101 and second heating zone facilitates simultaneous sintering and collapsing of the hollow soot porous body 101 in accordance with the method of the present invention.

It has been surprising observed by the inventors of this invention that the top end portion of the hollow soot porous body does not collapse completely if the top end T of the hollow soot porous body 101 is retained in the first heating zone or in the separator zone of the furnace 100. In the present case, it can be said that if the top end T is retained before the point 'A' of the curve 117 of the accompanying Figure 5, then the top end portion, measuring about 10-15% of the total length of the preform will not collapse completely thereby resulting in a wastage of about 10-15% of the overall production. If the top end T is made to sit down the point 'A' of the curve 117 of the Figure 5, then it will result in heating of the handle rod 6 thereby causing stretching in the rod resulting in breakage of the handle rod 106, which will not only result in breakage of the preform from the handle rod and its falling in the furnace without being converted to solid glass preform, but may also result in breakage of the maffle tube of the furnace.

However, when the top end portion of the hollow soot porous body is heat treated in accordance with the method of the present invention, it has been observed to collapse completely or almost completely thereby making the overall process highly productive and economical.

Accordingly, in accordance with the present invention, the top end T of the hollow soot porous body 101 is maintained at about start point 'A' of the second heat zone of the furnace, that is at about point 'A' of the curve 117 of the Figure 5.

In accordance with another embodiment of this invention, the preform is inserted in the furnace at a predetermined speed and maintained for a predetermined duration with its top end T being maintained at about start point 'A' of the second heat zone of the furnace, that is at about point 'A' of the curve 117 of the Figure 5. Thereafter, the preform is uplifted at a predetermined speed for pulling out the predetermined distance of the preform. In accordance with the most preferred embodiment of this invention, the preform is only uplifted for a predetermined distance and it is not completely withdrawn from the furnace before complete or almost complete collapse of the capillary thereof for observing the collapsing of the capillary thereby avoids heat loss on account of complete withdrawal of the preform.

The uplifted preform is re-inserted at a predetermined speed so as to make the top end T of the preform to sit at about start point 'A' of the second heat zone of the furnace, that is at about point 'A' of the curve 117 of the Figure 5. It has been surprisingly observed that the stepwise heat treatment of the preform in the manner of the present invention with its top end T being at about start point 'A' of the second heat zone of the furnace, that is at about point 'A' of the curve 117 of the Figure 5 results in complete or almost complete collapsing of the capillary including its top end portion, measuring about 10-15% of the total length of the preform thereby resulting in savings on the length of the preform and makes the overall process highly productive and economical. Further, as described herein above, the complete collapsing of the top end portion of the preform also results in achieving the low and uniform optical attenuation loss over the entire length of the fiber, including its top end portion, produced from the preform fabricated in accordance with the method of the present invention.

The optical fiber produced from the optical fiber preform produced by the present method has also been observed to have low and uniform optical attenuation loss in the wavelength region ranging from about 1300 to about 1625 nm including O-band, E-band and C-band regions. Further, the optical fiber produced from the preform of the present invention, not only has uniform optical attenuation loss over its entire length including the top end portion, but also has the optical attenuation loss less than about 0.35 dB/Km for the wavelength region ranging from about 1300 nm to about 1625 nm, particularly less than about 0.31 dB/Km at about 1383 nm (in E-band region), preferably less than about 0.34 dB/Km, more preferably less than about 0.33 dB/Km at about 1310 nm (in O-band region) and preferably less than about 0.20 dB/Km, more preferably less than about 0.19 dB/Km at about 1550 nm (in C-band region).

Further, the dehydration of the hollow soot porous body in the first heating zone followed by simultaneous sintering and collapsing of the preform in the second heating zone by passing through the separator zone in accordance with the present invention results in the optical fiber preform which in-turn results in production of the optical fiber having no or low absorption band at wavelength of 1383 nm, that is having no or low moisture (OH ions) contents.

In accordance with the present invention, the preform is inserted in the furnace at a determined speed and maintained in the furnace for a predetermined duration, and then uplifted inside the furnace at a predetermined speed, and then re-inserted in the furnace at a predetermined speed and maintained in the furnace for a predetermined duration for the heat treatment for the predetermined duration which makes the duration of completion of the overall process certain.

The present method is also suitable for producing the optical fiber having lower concentration of germanium oxide.

It is clear from the forgoing description of the present invention that it totally eliminates use of additional and sophisticated plug without any loss of length of the preform, that is even without employing the additional and sophisticated plug in the top end of the capillary of the preform, the present method achieves complete or almost complete closure of the capillary thereby making the present process more economical and less complicated.

The second hot zone measuring from about 2250 to 2450 mm of the furnace length or say about 200 mm in length and having a temperature of about 1550°C to about 1650°C has been observed to facilitate simultaneous sintering and collapsing according to the preferred embodiment of this invention thereby saving on time and avoiding an additional process step.

According to the preferred embodiments of this invention, the preform is moved from first hot zone to second hot zone at a predetermined descending speed preferably from about 3.5 mm/min to about 5 mm/min which has been found to have advantages of avoiding non-uniformity in the diameter of the preform and surface touch of the preform with the sinter tube.

The top end T of the preform 101 is positioned at about point 'A' of the second hot zone for a predetermined duration preferably less than about 10 min, more preferably less than about 6 min to accumulate heat at the un-collapsed capillary position. After completion of the predetermined duration, the preform 101 is uplifted for predetermined distance preferably about 17 to about 25 cm with predetermined speed preferably less than about 120 mm/min, more preferably less than about 60 min/mm.

The uplifting distance is determined based on the length of the un-collapsed capillary 102 of preform 101 and preform 101 size. The uplifting speed and distance determine the heat loss or heat accumulation at the preform. It has been found that when the uplifting speed is higher than predetermined speed the bottom end of capillary provided with plug 116 does not get expose to second hot zone (A - B) for longer time which has been found to result in un-collapsed capillary. On the other hand, it has also been observed that when the uplifting speed is lower than the predetermined speed then the handle rod 106 is exposed to higher temperature for longer duration which has been found to result in stretching of handle rod thereby causing the breakage of the handle rod. Similarly, it has also been observed that when the uplifting distance is greater than the predetermined distance, then the preform body gets cool due to heat losses thereby causing the major portion of the capillary to remain un-collapsed, and when the uplifting distance is lower than the predetermined distance, then the handle rod 106 is exposed to higher temperature for longer duration which has been found to result in stretching of handle rod thereby causing the breakage of the handle rod. It has been also observed by the present inventors that in case the preform is completely withdrawn from the furnace then the heat losses will be more thereby resulting in preform with un-collapsed capillary. The present invention has surprisingly also overcome these problems and at the same time has provides the completely or almost completely collapsed capillary in shorter duration.

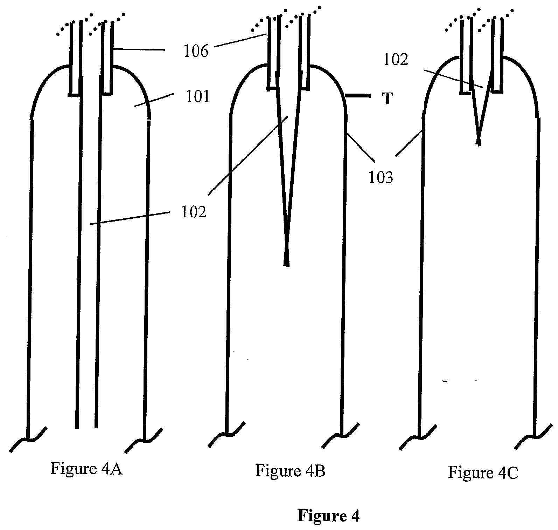

The optical fiber preform 101 is again inserted inside the second hot zone at a predetermined speed preferably from about 4 to about 5.5 mm/min and is made to sit with its top end T coinciding at about start point 'A' of second hot zone which has been found to have advantage of avoiding above described problems of the prior art methods. It has been observed that if the preform is re-inserted at a speed higher than selected speed, the capillary remains uncollapsed and if the preform is re-inserted at a speed lower than selected speed, the manufacturing cost is increased which renders the overall process uneconomical. After the top end T of the optical fiber preform 101 reaches at about point 'A' of the second heat zone it is maintained at this position for a predetermined duration of preferably from about 15 to about 30 min to result in formation of the preform having completely or almost completely collapsed capillary including at its top end portion. The preform positioning at the this position is determined based on the preform size and un-collapsed capillary length. The solid optical fiber preform 103 produced in accordance with present invention is shown in figure 4C. During the above steps, the vacuum is always applied inside the capillary 102 of optical fiber preform 101.

The preferred embodiment of the present invention wherein the present method is carried out with simultaneous sintering and collapsing, and rotation of the preform has been observed to demonstrate additional advantage of physically uniform dimension of the solid glass perform 103 exhibiting without any physical defects thereby making the process easier to be carried out without any problem.

Accordingly, in accordance with this preferred embodiment, the preform 101 is made to rotate with the help of rotator (not shown) provided with glass assembly rod 111 to achieve further uniform heat treatment of the preform 101. The rotation of the preform 101 is preferably carried out at a predetermined speed.

The present invention has been explained while considering that the preform is moved inside the furnace from first heat zone to second heat zone. However, the present invention is also possible if the preform is kept stationary and the furnace or its muffle tube is moved relative to the preform. In accordance with this preferred embodiment of this invention, the preform 101 is kept stationary and the heat zones are moved relative to the preform so that the top end T of the preform 101 coincides with the point 'A' of the second heating zone on first insertion and re-insertion. As per this embodiment, the preform 101 may also be rotated with the help of rotator.

Further, the present invention is also suitable for any combination of refractive index and/or diameter of the core and clad.

### Detailed manner of performing this invention:

The process of the present invention is initiated in the manner as described herein above. The dehydration process step is facilitated with gases, for example Cl₂, CCl₄, SiCl₄, GeCl₄, or any combination thereof, and inert gas for example He, Ar, N₂ which also act as heat carriers to facilitate effective dehydration and sintering of the hollow soot porous body 101. These gases are fed into the furnace 100 through an inlet port 115 located suitably on the furnace, preferably near the bottom of the muffle tube 110. The top end of the muffle tube 110 is closed with the lid 113 to achieve the most preferred temperature profile for example of curve 117 [Figure 5], as described herein above, inside the muffle tube 110 and to maintain the same during the dehydration, and simultaneous sintering and collapsing process steps, and to avoid leakage of gases from the muffle tube 110 to the outside environment. A suction port 114 is suitably provided near the top of muffle tube 110 to facilitate evacuation of the gases from the muffle tube 110 as and when required or on completion of the process.

The bottom end of the soot porous body 101 is closed with glass frustum 116 before inserting inside the sintering furnace 100. The glass frustum 116 may not be necessarily high purity quartz glass. The top end T of the hollow soot porous body 101 supported with the handle rod 106 is mounted over the coupler 108 with the help of ball 109. The coupler 108 is connected with the glass assembly rod 111. The inside of the glass assembly rod 111 consists of smaller dimension glass tube 112 which is connected to the top end T of the hollow soot porous body 101 through ball 109 and its opposite end 116A is connected to the vacuum generator (not shown) provided for achieving the required negative pressure inside the capillary 102 of the hollow soot porous body 101.

As described herein above, the glass assembly rod 111, in accordance with one of the preferred embodiments is capable of rotating to rotate the hollow soot porous body 101 with the help of rotator (not shown) provided for the purpose.

In one of the another preferred embodiment, the rotator may make the hollow soot porous body 101 to rotate at a predetermined speed preferably from about 2 to about 5.5 rpm.

According to the preferred embodiment of this invention, the hollow soot porous body 101 fed inside the sintering furnace 100 having above defined three heating zones [for example as per curve 117 of Figure 5] simultaneously under goes sintering and collapsing steps. The first hot zone facilitates dehydration and the second hot zone facilitates simultaneous sintering and collapsing steps. The hollow soot porous body 101 is kept under the temperature range varying from about 1000°C to about 1100°C (first hot zone) along the length of the hollow soot porous body in order to dehydrate said hollow soot porous body 101. The drying gas and inert gas, preferably chlorine and helium, are provided inside the furnace 100 with predetermined flow rates suitable to remove the OH ions from the hollow soot porous body 101 during the dehydration step to exhibit no or very low OH ions core region. During the said dehydration step, the hollow soot porous body 101 is kept at the same place inside the furnace 100 for predetermined duration preferably from about 3 to 7 hrs. The hollow soot porous body 101 may or may not be rotated during dehydration. The hollow soot porous body 101 after dehydration process is depicted in accompanying Figure 4A indicating that the capillary 102 has not collapsed.

After completion of the dehydration process step, the hollow soot porous body 101 is moved to the second hot zone region of furnace 100 with predetermined descending speed preferably from about 3.5 mm/min to about 5 mm/min to have advantages of avoiding non-uniformity in the diameter of the preform and surface touch of the preform with the sinter tube.

The vacuum generator is switched on before inserting the hollow soot porous body 101 inside the second hot zone to generate negative pressure inside the capillary 102 of hollow soot porous body 101.

In accordance with present invention said vacuum is maintained preferably from about 125 to about 200 torr inside the capillary in order to cause collapsing of capillary simultaneously with the sintering process step which has been found to have advantages of producing completely collapsed capillary and at the same avoiding non-circularity in the core of the preform. The second hot zone region temperature profile is preferably as illustrated by curve 117 of Figure 5. The length of second hot zone is approximately about 200 mm and the maximum temperature is above about 1500°C and below about 1650°C in order to simultaneously sinter and collapse the said hollow soot porous body 101. The sintering and collapsing process steps are carried out simultaneously while generating negative pressure inside the capillary 102 of the hollow soot porous body 101, preferably with rotation to form solid glass preform 103 inside the inert gas medium preferably helium. The sintering and collapsing process steps may be carried out along with drying gas medium preferably chlorine. A driving force is provided thereby causing removal of the last trace of OH ions inside the core region during simultaneous sintering and collapsing steps. A vacuum generator (not shown) is provided to generate driving force inside the hollow soot porous body 101.

The collapsing process step of hollow soot porous body 101 during sintering step is accomplished by generating a negative pressure inside the capillary 102 of hollow soot porous body 101 and heating the hollow soot porous body 101 with the temperature from about 1500°C to about 1650°C to soften sufficiently in order to form the solid glass preform 103 as shown in Figure 4C having completely collapsed top end portion. In an embodiment of the invention the dehydration, sintering and collapsing steps are carried out such that the glass body temperature is never allowed below less than 650°C, that is out side the said first heat zone.

The hollow soot porous body 101 is inserted inside the furnace 100 so that its top end T reaches start point at about point 'A' of the second hot zone [Figure 5]. When preform 101 reaches the point 'A' of second hot zone, the collapsing also starts and the preform is then found to have partly open capillary 102 as illustrated in accompanying Figure 4B. The length of the un-collapsed capillary 102 at its top end portion is about 10-15 cm, that is about 10 to 15% of the total length of preform 101. It has been observed that further movement of the top end T inside the second hot zone may result in heating of the handle rod 106 due to higher temperature thereby causing the handle rod 106 to get stretched due to smaller dimension of handle rod 106 as compared to that of the optical fiber preform 101. Due to the stretching of handle rod 106, the handle rod 106 breaks away and the preform falls inside the furnace 100 resulting in loss of production. This causes huge manufacturing and productivity loss. The stretching of handle rod 106 may be avoided by using larger diameter handle rod similar to preform size, but increasing diameter of handle rod will result in increase in manufacturing cost. Further, the smaller diameter handle rod is requirement of deposition process and cannot be increased due to process constraints in deposition step. Therefore, as described herein above in accordance with this invention, the top end T is maintained at about starting point 'A' of the second hot zone.

The top end T of the preform 101 is positioned at about point 'A' of the second hot zone for a predetermined duration preferably less than about 10 min, more preferably less than about 6 min. to accumulate heat at the un-collapsed capillary position. After completion of the predetermined duration, the preform 101 is uplifted for predetermined distance preferably from about 17 to about 25 cm with predetermined speed less than about 120 mm/min, more preferably less than about 60 min/mm.

In accordance with one preferred embodiment of the present invention, the optical fiber preform 101 is again inserted inside the second hot zone at a predetermined speed preferably from about 4 to about 5.5 mm/min, which has been found have advantages of avoiding producing the preform having uncollapsed capillary and increase in overall cost of manufacturing the fiber. After the top end T of the optical fiber preform 101 reaches at about point 'A' of the second heat zone it is maintained at this position for a predetermined duration of preferably from about 15 to about 30 min which has been found to have advantages of avoiding above described problems of the prior art methods.

The solid glass preform 103 prepared as per the present invention is either directly drawn into optical fiber or drawn into core rod. The prepared core rod is fire polished with low temperature preferably below about 1800°C so that OH ions do not diffuse inside the core rod. Then the prepared core rod is overcladded with cladding material to form the optical fiber preform having overcladding. The optical fiber preform forms the base material from which the optical fiber is drawn.

In one embodiment, the present invention provides that the drawn optical fiber is exposed to or treated with the deuterium gas to have deuterium treated optical fiber which has been found to have advantage of no or reduced hydrogen ageing loss. The method for exposing or treating an optical fiber with the deuterium gas is one known to persons skilled in the art.

The optical fiber thus drawn from the preform as produced by the present invention shows low and uniform optical attenuation loss over its entire length including the top end portion, wherein the optical attenuation loss is less than about 0.35 dB/km in the wavelength region of about 1300 to about 1625 nm, particularly less than about 0.31 dB/Km at about 1383 nm (in E-band region), preferably less than about 0.34 dB/Km, more preferably less than about 0.33 dB/Km at about 1310 nm (in O-band region) and preferably less than about 0.20 dB/Km, more preferably less than about 0.19 dB/Km at about 1550 nm (in C-band region).

The optical attenuation loss along the entire length including the top end portion of the optical fiber preform produced by a method known in the prior art is shown in accompanying Figure 6 indicating that it is neither uniform nor low. The right ends of the curves show higher attenuation loss at the top end portion of the preform.

The optical attenuation loss along the entire length including the top end portion of the optical fiber preform produced by a method of the present invention is shown in accompanying Figure 7 indicating that it is not only low, but also uniform over the entire length of the preform including the top end portions thereby confirming the findings of the present invention.

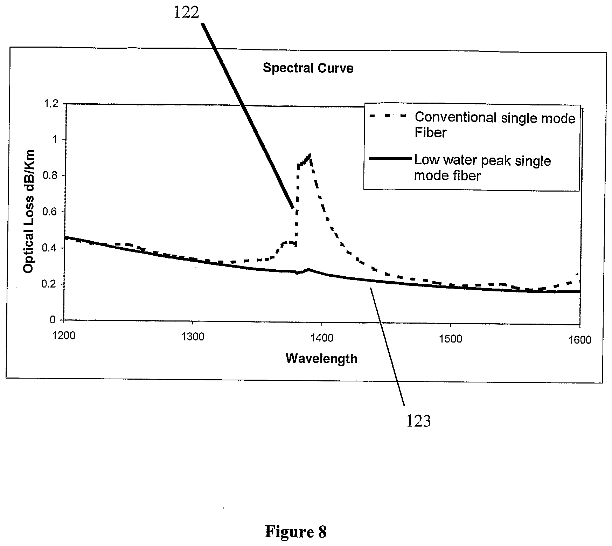

The spectral attenuation plot of the fiber is shown in the accompanying Figure 8. The attenuation plot of the fiber of the prior art is 122 and of the present invention is 123. It is clear from the accompanying Figure 7 and Figure 8 that the heat treatment of the preform in accordance with the present invention results in fiber with optical attenuation loss being less than about 0.31 dB/km at about 1383 nm which is less than the optical attenuation loss at about 1310 nm, which is less than about 0.33 dB/km. The low optical attenuation loss of less than about 0.29 dB/km at about 1383 nm is due to complete collapsing of capillary of the hollow soot porous body and very low OH absorption loss achieved by present invention.

The chromatic dispersion value of the optical fiber and its dependence on the wavelength is as desired and found to be 18 ps/nm/Km or less at 1565 nm. The optical fiber prepared according to the present invention has shown cutoff wavelength less than about 1320 nm and more preferably less than about 1260 nm.

The present invention is now described with the help of following examples which are not intended to limit scope of this invention.

### Example 1 [Prior Art Method]:

The soot deposition over the tapered cylindrical member is performed in a known manner to produce the soot porous body with desired core diameter and clad diameter of soot. The tapered cylindrical member is detached from the soot porous body to have capillary diameter in the range of about 6 mm to about 8 mm from the bottom end to the top end of the hollow soot porous body. Before inserting the hollow soot porous body inside the sintering furnace, the capillary of the hollow soot porous body is purged with purified N₂ at a flow rate of about 20 SLPM for about 5 minutes to ensure that no loose soot particles are present inside the capillary. The hollow soot porous body is inserted inside the sintering furnace in the first hot zone region where the temperature is kept in the range of about 1050° to about 1150°C for dehydration. During the dehydration, He flow rate is kept at about 30 SLPM and Cl₂ flow rate is kept at about 1.5 SLPM from the bottom end of the sintering furnace. The bottom end of the hollow soot porous body is positioned at about 1750 mm from the top end of sintering furnace for the duration varying from about 3 hrs to about 5 hrs for removal of moisture (OH) contents. After completion of the dehydration, the Cl₂ flow rate is reduced from about 1.5 SLPM to about 0.4 SLPM and He flow rate is increased to about 40 SLPM for simultaneous sintering and collapsing process steps. The vacuum is switched onto generate negative pressure preferably of about 125 to about 200 torr inside the capillary in order to cause collapsing simultaneously with sintering process step. The dehydrated hollow soot porous body is now inserted with a speed of about 4.5 mm/min inside the second hoztone of the sintering furnace where the temperature is kept in the range of about 1550° to about 1650° C. While the hollow soot porous body is moving inside the hot zone, the hollow soot porous body gets sintered and collapsed due to high temperature and negative pressure inside the capillary so as to form a solid optical fiber preform. At this stage, the capillary of top end portion of optical fiber preform (mother preform) is found to be un-collapsed for about 150 mm length. This optical fiber preform is drawn into core rod in rod draw furnace and the core rod is overcladded to form optical fiber preform (daughter preform) by forming soot porous body, dehydrating and sintering the soot porous body. The optical fiber is drawn from the optical fiber preform and the optical attenuation loss along the length of optical fiber preform is measured as shown in **Figure 6**. The optical attenuation loss at the top end of optical fiber preform is found to be about 0.355 dB/Km at 1310 nm (curve 118) and about 0.205 dB/Km at 1550 nm (curve 119) as shown in **Figure 6**. This experiment confirms that the optical fiber preform produced as per the prior art method has open capillary measuring about 150 mm in the top end portion of the preform. Further, the optical attenuation loss of the preform produced by prior art method is not only higher, but also non-uniform over the entire length particularly at the top end portion thereof.

### Example 2 [Present Method]:

The soot deposition over the tapered cylindrical member is performed in a known manner to produce the soot porous body with desired core diameter and clad diameter of soot. The tapered cylindrical member is detached from the soot porous body to have capillary diameter in the range of about 6 mm to about 8 mm from the bottom end to the top end of the hollow soot porous body. Before inserting the hollow soot porous body inside the sintering furnace, the capillary of the hollow soot porous body is purged with purified N₂ at a flow rate of about 20 SLPM for about 5 minutes to ensure that no loose soot particles are present inside the capillary. The hollow soot porous body is inserted inside the sintering furnace in the first hot zone region where the temperature is kept in the range of about 1050° to about 1150°C for dehydration. During the dehydration, He flow rate is kept at about 30 SLPM and Cl₂ flow rate is kept at about 1.5 SLPM from the bottom end of the sintering furnace. The bottom end of the hollow soot porous body is positioned at about 1750 mm from the top end of sintering furnace for the duration varying from about 3 hrs to about 4 hrs for removal of moisture (OH) contents. After completion of the dehydration, the Cl₂ flow rate is reduced from about 1.5 SLPM to about 0.4 SLPM and He flow rate is increased to about 40 SLPM for simultaneous sintering and collapsing process steps. The vacuum is switched onto generate negative pressure preferably of about 125 to about 200 torr inside the capillary in order to cause collapsing of capillary simultaneously with the sintering process step. The dehydrated hollow soot porous body is now inserted with a speed of about 5 mm/min inside the second hot zone of the sintering furnace where the temperature is kept in the range varying from about 1550° to about 1650° C. The insertion speed is determined based on the size of the hollow soot porous body. The top end T of the hollow soot porous body is inserted to coincide with the position 'A' of the second hot zone. While the hollow soot porous body is moving inside the hot zone, the hollow soot porous body gets simultaneously sintered and collapsed due to high temperature and negative pressure inside the capillary so as to form a solid optical fiber preform.

At this stage, the capillary of top end portion of optical fiber preform is found to be un-collapsed for about 150 mm length. This optical fiber preform is subjected to further process steps of the present invention as described herein above. The preform is uplifted for length L1 at a speed of S1 and re-inserted at a speed of S2 till its top end T coincides with point 'A' in the furnace and retained at this position for a duration of D2 and withdrawn from the furnace. The withdrawn preform was observed for un-collapsed capillary. The preform (1) produced did not show the uncollapsed capillary confirming that the present method results in complete closure / collapsing of capillary in the hollow soot porous body produced by any method.

The above example was repeated to produce one more preform. The preform (2) produced was observed for un-collapsed capillary. The preform produced did show the un-collapsed capillary, but only measuring less than 10 mm confirming that the present method results in almost complete closure / collapsing of capillary in the hollow soot porous body produced by any method.

The selected parameters of these two experiments are depicted in following Table-1, where in one preform un-collapsed capillary was observed to be less than 10 mm and in another it was observed to completely collapsed.

**Table 1:**

| Preform | Duration D1 (min) | Uplift Length (L1) (mm) | Uplift speed (S1) (mm/min) | Insertion speed (S2) (mm/min) | Duration D2 (min) | Uncollapsed capillary length (L) (mm) |
|---|---|---|---|---|---|---|
| (1) | 5 | 200 | 50 | 5 | 20 | 0 |
| (2) | 5 | 200 | 100 | 5 | 20 | Less than 10 |

These findings confirm that the present method results in almost complete closure of capillary thereby making the present method more productive and economical.

The preform (1) produced was analyzed for optical attenuation loss at 1310 nm and 1550 nm and the results are illustrated in accompanying **Figure 7**. The optical attenuation loss at the top end of optical fiber preform is found to be less than about 0.33 dB/Km at 1310 nm (curve 120) and less than about 0.19 dB/Km at 1550 nm (curve 121). The graphs in **Figure 7** also illustrate that the optical attenuation loss is not only low and within the desired limits, but also uniform over the entire length of the preform including its top end portion. Accordingly, this experiment confirms that the optical attenuation loss of the preform produced by present method is not only lower and within the desired limits, but also uniform over the entire length including at the top end portion thereof.

The optical attenuation loss of the preform (1) produced by present method in the wavelength region of 1200 nm to 1600 nm is illustrated in accompanying **Figure 8** which demonstrates that the absorption at about 1383 nm is less than about 0.29 dB/Km (curve 123) confirming low water peak as compared to conventionally produced preform.

The fiber produced from the preform (1) has shown cut-off wavelength in the range varying from about 1160 to about 1320 nm, chromatic dispersion greater than about 0.1 ps/nm/km at about 1383 nm, chromatic dispersion slope less than about 0.1 ps/nm²/km at 1550 nm and chromatic dispersion equal to or less than about 18 ps/nm/km at about 1565 nm.

Accordingly, it is understood from the foregoing description that presently disclosed method has been found to have, in-addition to various advantages described hereinabove, advantages of avoiding a) formation of un-collapsed capillary in the preform, b) stretching of handle rod thereby avoiding breakage of the handle rod, c) heat losses which in-turn avoids formation of un-collapsed capillary, advantages of d) saving on overall cost of method of manufacturing the fiber and e) saving on overall process duration for manufacturing the fiber.

## Claims

1. A method for producing optical fiber preform capable of producing optical fiber having low and uniform optical attenuation loss along its entire length including a top end portion comprising:
i) depositing soot over a tapered cylindrical member to form a soot porous body having a core (104) and a clad (105);
ii) detaching the tapered cylindrical member from the soot porous body to form a hollow soot porous body (101);
iii) inserting a plug (116) in the bottom end of a capillary (102) of the hollow soot porous body (101);
iv) dehydrating the hollow soot porous body (101) in a chemical environment suitable to completely remove the moisture in core;
**characterized in that**
the dehydrated hollow soot porous body (101) is simultaneously sintered and collapsed inside a sintering furnace (100) while providing vacuum inside the capillary (102) to form solid glass optical fiber preform (103) having collapsed capillary (102);
the simultaneous sintering and collapsing are carried out by inserting the dehydrated hollow soot porous body (101) with predetermined speed in a hot zone of the furnace till a top end (T) of the preform (101) reaches the hot zone and is left for a predetermined duration;
thereafter the preform (101) is uplifted for a predetermined length at a predetermined speed to avoid heat loss in the optical preform and re-inserted in the hot zone of sintering furnace at a predetermined speed and left for predetermined duration to result in formation of the preform (103) having collapsed capillary or centerline (102) including at the top end (T) of the preform (103).

2. A method as claimed in claim 1, wherein said hot zone of sintering furnace includes a first heat zone having a temperature varying in the range of 1000 degree centigrade to 1100 degree centigrade, a separator having a temperature varying in the range of 1100 degree centigrade to 1550 degree centigrade and a second heat zone having a temperature varying in the range of 1550 degree centigrade to 1650 degree centigrade.

3. A method as claimed in any one of preceding claim 1 or 2, wherein the first heat zone facilitates dehydration and second heat zone facilitates simultaneous sintering and collapsing of the hollow soot porous body (101).

4. A method as claimed in any one of preceding claims 1 to 3, wherein the top end (T) of the hollow soot porous body [preform (103)] is maintained at start point 'A' of second hot zone.

5. A method as claimed in claim 4, wherein the top end (T) of the preform (103) is maintained for a predetermined duration preferably less than 10 min, more preferably less than 6 min.

6. A method as claimed in claim 5, wherein after completion of the predetermined duration, the preform (103) is uplifted for predetermined distance preferably from 17 cm to 25 cm.

7. A method as claimed in claim 6, wherein the preform (103) is uplifted with predetermined speed preferably less than 120 mm/min, more preferably less than 60 mm/mm.

8. A method as claimed in claim 1 or 7, wherein the preform (103) is re-inserted in the second hot zone at a predetermined speed preferably from 4 mm/min to 5.5 mm/min and is made to sit with its top end (T) coinciding at start point 'A' of second hot zone.

9. A method as claimed in claim 1, 7 or 8, wherein the preform (103) is left for predetermined duration of preferably from 15 min to 30 min to result in formation of the preform having collapsed capillary including at its top end portion (T).

10. A method as claimed in any of the preceding claims, wherein the preform (103) is moved from first hot zone to second hot zone at a predetermined descending speed preferably from 3.5 mm/min to 5 mm/min.

11. A method as claimed in any of the preceding claims, wherein the hollow soot porous body [preform (103)] is not completely withdrawn from the furnace (100) before complete or almost complete collapse of the capillary (102) thereof.

12. A method as claimed in any of the preceding claims, wherein no additional plug is provided in the top end of capillary (102) of the preform (103).

13. A method as claimed in any of the preceding claims, wherein the simultaneous sintering and collapsing steps are carried out under a vacuum maintained preferably from 125 torr to 200 torr.

14. A method as claimed in any of the preceding claims, wherein the inserted preform (103) is made to rotate with the help of rotator to achieve further uniform heat treatment of the preform (103).

15. A method as claimed in claim 14, wherein the rotation of the preform (103) is preferably carried out at a predetermined speed from 2 rpm to 5.5 rpm.

16. A method as claimed in any one of claims 1 to 13, wherein the preform (103) is kept stationary and the heat zones are moved relative to the preform (103).

17. The method as claimed in claim 1, wherein said optical fiber has optical attenuation loss of less than 0.29 dB/km at wavelength of 1383 nm.

18. The method as claimed in claim 1, wherein said optical fiber has a cut off wavelength in the range varying from 1160 nm to 1320 nm, a chromatic dispersion greater than 0.1 ps/nm/km at 1383 nm, a chromatic dispersion slope less than 0.1 ps/nm²/km at 1550 nm and a chromatic dispersion equal to or less than 18 ps/nm/km at 1565 nm.

## Patentansprüche

1. Verfahren zum Herstellen einer Vorform für Lichtleiter, die zum Herstellen von Lichtleitern mit niedrigem und gleichmäßigem optischen Dämpfungsverlust über die gesamte Länge geeignet ist, einschließlich eines oberen Endbereichs, wobei das Verfahren Folgendes umfasst:
i) Abscheiden von Ruß über einem konischen zylindrischen Element, um einen rußporösen Körper mit einem Kern (104) und einer Umhüllung (105) zu bilden;
ii) Lösen des konischen zylindrischen Elements von dem rußporösen Körper, um einen hohlen rußporösen Körper (101) zu bilden;
iii) Einsetzen eines Stopfens (116) in das untere Ende einer Kapillare (102) des hohlen rußporösen Körpers (101);
iv) Dehydrieren des hohlen, rußporösen Körpers (101) in einer chemischen Umgebung, die geeignet ist, die Feuchtigkeit im Kern vollständig zu entfernen;
**dadurch gekennzeichnet,**
**dass** der dehydrierte, hohle, rußporöse Körper (101) gleichzeitig gesintert und innerhalb eines Sinterofens (100) zusammengedrückt wird, während innerhalb der Kapillare (102) ein Vakuum ausgebildet wird, um eine Vorform (103) für feste optische Glasfasern mit zusammengedrückter Kapillare (102) zu formen;
**dass** das gleichzeitige Sintern und Zusammendrücken durchgeführt wird, indem der dehydrierte, hohle, rußporöse Körper (101) mit einer vorbestimmten Geschwindigkeit in eine heiße Zone des Ofens eingeführt wird, bis ein oberes Ende (T) der Vorform (101) die heiße Zone crrcicht, und dort für eine vorbestimmte Dauer belassen wird;
**dass** danach die Vorform (101) mit einer vorbestimmten Geschwindigkeit um eine vorbestimmte Länge angehoben wird, um Wärmeverluste in der optischen Vorform zu vermeiden, und wieder in die heiße Zone des Sinterofens mit einer vorbestimmten Geschwindigkeit eingesetzt wird und dort für eine vorbestimmte Dauer belassen, um zur Bildung der Vorform (103) mit zusammengedrückter Kapillare oder Mittellinie (102) einschließlich des oberen Endes (T) der Vorform (103) zu führen.

2. Verfahren nach Anspruch 1,
wobei die heiße Zone des Sinterofens eine erste Heizzone mit einer Temperatur, die im Bereich von 1000 °C bis 1100 °C variiert, einen Separator mit einer Temperatur, die im Bereich von 1100 °C bis 1550 °C variiert, und eine zweite Heizzone mit einer Temperatur aufweist, die im Bereich von 1550 °C bis 1650 °C variiert.

3. Verfahren nach einem der vorstehenden Ansprüche 1 oder 2,
wobei die erste Heizzone die Dehydrierung erleichtert und die zweite Heizzone das gleichzeitige Sintern und Zusammendrücken des hohlen, rußporösen Körpers (101) erleichtert.

4. Verfahren nach einem der vorhergehenden Ansprüche 1 bis 3,
wobei das obere Ende (T) des hohlen, rußporösen Körpers [Vorform (103)] am Startpunkt "A" der zweiten heißen Zone gehalten wird.

5. Verfahren nach Anspruch 4,
wobei das obere Ende (T) der Vorform (103) für eine vorbestimmte Dauer, vorzugsweise weniger als 10 min, noch bevorzugter weniger als 6 min, gehalten wird.

6. Verfahren nach Anspruch 5,
wobei nach Beendigung der vorbestimmten Dauer die Vorform (103) um eine vorbestimmten Strecke, vorzugsweise von 17 cm bis 25 cm, angehoben wird.

7. Verfahren nach Anspruch 6,
wobei die Vorform (103) mit einer vorbestimmten Geschwindigkeit, vorzugsweise weniger als 120 mm/min, noch bevorzugter weniger als 60 mm/min, angehoben wird.

8. Verfahren nach Anspruch 1 oder 7,
wobei die Vorform (103) in die zweite heiße Zone mit einer vorbestimmten Geschwindigkeit, vorzugsweise von 4 mm/min bis 5,5 mm/min, wieder eingesetzt wird und derart angeordnet wird, dass ihr oberes Ende (T) mit dem Startpunkt A' der zweiten heißen Zone übereinstimmt.

9. Verfahren nach Anspruch 1, 7 oder 8,
wobei die Vorform (103) für eine vorbestimmte Dauer von vorzugsweise 15 min bis 30 min dort belassen wird, um die Bildung der Vorform mit zusammengedrückter Kapillare, einschließlich ihres oberen Endbereichs (T), zu bewirken.

10. Verfahren nach einem der vorhergehenden Ansprüche,
wobei die Vorform (103) von der ersten heißen Zone in die zweite heiße Zone mit einer vorbestimmten Absenkgeschwindigkeit, vorzugsweise von 3,5 mm/min bis 5 mm/min, bewegt wird.

11. Verfahren nach einem der vorstehenden Ansprüche beansprucht,
wobei der hohle, rußporöse Körper [Vorform (103)] nicht vollständig aus dem Ofen (100) herausgezogen wird, bevor die Kapillare (102) vollständig oder fast vollständig zusammengedrückt ist.

12. Verfahren nach einem der vorhergehenden Ansprüche,
wobei kein zusätzlicher Stopfen am oberen Ende der Kapillare (102) der Vorform (103) vorgesehen wird.

13. Verfahren nach einem der vorstehenden Ansprüche,
wobei die gleichzeitigen Sinter- und Zusammendrück-Schritte unter einem Vakuum, vorzugsweise in einem bei 125 Torr bis 200 Torr gehaltenen Vakuum, durchgeführt werden.

14. Verfahren nach einem der vorhergehenden Ansprüche,
wobei die eingesetzte Vorform (103) mit Hilfe eines Rotators in Drehung versetzt wird, um eine weitere gleichmäßige Wärmebehandlung der Vorform (103) zu erreichen.

15. Verfahren nach Anspruch 14,
wobei die Drehung der Vorform (103) vorzugsweise mit einer vorbestimmten Drehzahl von 2 U/min bis 5,5 U/min durchgeführt wird.

16. Verfahren nach einem der Ansprüche 1 bis 13,
wobei die Vorform (103) stationär gehalten wird und die Heizzonen relativ zu der Vorform (103) bewegt werden.

17. Verfahren nach Anspruch 1,
wobei der Lichtleiter einen optischen Dämpfungsverlust von weniger als 0,29 dB/km bei einer Wellenlänge von 1383 nm aufweist.

18. Verfahren nach Anspruch 1,
wobei der Lichtleiter eine Grenz-Wellenlänge im Bereich von 1160 nm bis 1320 nm, eine chromatische Dispersion von mehr als 0,1 ps/nm/km bei 1383 nm, eine chromatische Dispersionsneigung von weniger als 0,1 ps/nm²/km bei 1550 nm und eine chromatische Dispersion von weniger als 18 ps/nm/km bei 1565 nm aufweist.

## Revendications

1. Procédé de production de fibre optique apte à produire de la fibre optique présentant une atténuation faible et uniforme le long de la longueur entière de la fibre optique comportant une partie d'extrémité supérieure, le procédé comprenant :
(i) le dépôt de suie sur un organe cylindrique effilé afin de former un corps de suie poreux présentant une âme et (104) et un revêtement (105) ;
(ii) le détachement de l'organe cylindrique effilé du corps de suie poreux afin de former un corps de suie creux poreux (101) ;
(iii) l'insertion d'un bouchon (116) dans l'extrémité inférieure d'une capillarité du corps creux de suie poreux (101) ;
(iv) la déshydratation du corps de suie creux poreux (101) dans un environnement chimique adapté à l'enlèvement complet de l'humidité dans l'âme ;
**caractérisé en ce que** :
le corps de suie creux poreux déshydraté (101) est fritté et effondré de manière simultanée à l'intérieur d'un four de frittage (100) tout en appliquant un vide à l'intérieur de la capillarité (102) afin de former une préforme de fibre optique en verre solide (103) présentant une capillarité effondrée (102) ;
le frittage et effondrement simultanés sont effectués par l'insertion du corps de suie creux poreux déshydraté (101) dans une zone chaude du four à une vitesse prédéterminée jusqu'à ce qu'une extrémité supérieure (T) de la préforme (101) atteint la zone chaude et y est laissée pendant une durée prédéterminée ;
ensuite, la préforme (101) est soulevée d'une longueur prédéterminée et à une vitesse prédéterminée pour éviter une perte de chaleur dans la préforme optique et ré-introduite dans la zone chaude du four de frittage à une vitesse prédéterminée et y est laissée pendant une durée prédéterminée pour former la préforme (103) présentant la capillarité, ou ligne médiane (102), effondrée, y compris à l'extrémité supérieure (T) de la préforme (103).

2. Procédé selon la revendication 1, selon lequel ladite zone chaude du four de frittage comporte une première zone présentant une température pouvant varier dans la plage de 1000°C et 1100°C, un séparateur présentant une température pouvant varier dans la plage de 1100°C et 1500°C et une deuxième zone chaude présentant une température pouvant varier dans la plage de 1550°C et 1650°C.

3. Procédé selon l'une quelconque des revendications 1 ou 2, selon lequel la première zone facilité la déshydratation et la deuxième zone chaude facilite le frittage et l'effondrement simultanés du corps de suie poreux creux.

4. Procédé selon l'une quelconque des revendications 1 à 3, selon lequel l'extrémité supérieure (T) du corps de suie poreux creux (préforme 103) est maintenue à un point de démarrage « A » de la deuxième zone chaude.

5. Procédé selon la revendication 4, selon lequel l'extrémité supérieure (T) de la préforme (103) est maintenue pendant une durée prédéterminée, de préférence inférieure à 10 minutes, et de manière plus préférée inférieure à 6 minutes.

6. Procédé selon la revendication 5, selon lequel après la fin de la durée prédéterminée, la préforme est soulevée d'une longueur prédéterminée, de préférence de 17 cm à 25 cm.

7. Procédé selon la revendication 6, selon lequel la préforme est soulevée à une vitesse prédéterminée, de préférence inférieure à 120 mm/min, et de manière plus préférée inférieure à 60 mm/min.

8. Procédé selon la revendication 1 ou la revendication 7, selon lequel la préforme (103) est ré-introduite dans la deuxième zone chaude à une vitesse prédéterminée, de préférence de 4 mm/min à 5,5 mm/min, et est maintenue dans une position dans laquelle son extrémité supérieure (T) coïncide avec le point de démarrage « A » de la deuxième zone chaude.

9. Procédé selon la revendication 1, 7 ou 8, selon lequel la préforme (103) est laissée pendant une durée prédéterminée, de préférence de 15 minutes à 30 minutes, afin de former la préforme présentant une capillarité effondrée y compris dans sa partie d'extrémité supérieure (T).

10. Procédé selon l'une quelconque des revendications précédentes, selon lequel la préforme (103) est déplacée de la première zone chaude vers la deuxième zone chaude à une vitesse descendante prédéterminée, de préférence de 3,5 mm/min à 5 mm/min.

11. Procédé selon l'une quelconque des revendications précédentes, selon lequel le corps de suie poreux creux (préforme 103) n'est pas complètement retiré du four (100) avant l'effondrement complet ou presque complet de la capillarité (102) de celui-ci.

12. Procédé selon l'une quelconque des revendications précédentes, selon lequel aucun bouchon supplémentaire n'est fourni au niveau de l'extrémité supérieure de la capillarité (102) de la préforme (103).

13. Procédé selon l'une quelconque des revendications précédentes, selon lequel les étapes de frittage et d'effondrement simultanés sont effectuées sous un vide maintenu de préférence de 125 torr à 200 torr.

14. Procédé selon l'une quelconque des revendications précédentes, selon lequel la préforme insérée (103) est mise en rotation à l'aide d'un rotor, afin d'obtenir un traitement par chaleur uniforme supplémentaire de la préforme (103).

15. Procédé selon la revendication 14, selon lequel la mise en rotation de la préforme (103) s'effectue de préférence à une vitesse prédéterminée de 2 tpm à 5,5 tpm.

16. Procédé selon l'une quelconque des revendications 1 à 13, selon lequel la préforme est maintenue stationnaire et les zones chaudes sont déplacées par rapport à la préforme (103).

17. Procédé selon la revendication 1, selon lequel ladite fibre optique présente une atténuation inférieure à 0,29 db/km à une longueur d'onde de 1383 nm.

18. Procédé selon la revendication 1, selon lequel ladite fibre optique présente une longueur d'onde de coupure dans la plage de 1160 nm à 1320 nm, une dispersion chromatique supérieure à 0,1 ps/nm/km à 1383 nm, une pente de dispersion chromatique inférieure à 0,1 ps/nm²/km à 1550 nm, et une dispersion chromatique égale ou inférieure à 18 ps/nm/km à 1565 nm.
